# EUROPÄISCHE PATENTSCHRIFT

(11) **EP 3 659 421 B1**
(45) Veröffentlichungstag und Bekanntmachung des Hinweises auf die Patenterteilung: **12.04.2023**
(21) Anmeldenummer: 19211296.9
(22) Anmeldetag: 25.11.2019
(51) Int. Cl.: A01D 41/127, A01D 61/00

(54) **ERNTEVORSATZ MIT VERSTELLBARER QUERFÖRDERSCHNECKE**
HARVESTING HEADER WITH ADJUSTABLE TRANSVERSE AUGER
TÊTE DE RÉCOLTE DOTÉE DE VIS SANS FIN TRANSVERSALE RÉGLABLE

(30) Priorität: 27.11.2018 DE 102018220337
(43) Veröffentlichungstag der Anmeldung: 03.06.2020
(73) Patentinhaber: Deere & Company, Moline, IL 61265 (US)
(72) Erfinder: Fries, Christina, 68163 Mannheim (DE); Lauer, Friedrich, 68163 Mannheim (DE); Loutz, Eric, 68163 Mannheim (DE); Klein, Oliver, 68163 Mannheim (DE); Bischoff, Lutz, 68163 Mannheim (DE); Weichholdt, Dirk, 68163 Mannheim (DE)
(74) Vertreter: Holst, Sönke

(56) Entgegenhaltungen:
- EP-A1- 0 993 766
- EP-A1- 3 628 142
- DE-C2- 4 021 030
- US-A1- 2018 271 019

## Beschreibung

Die vorliegende Erfindung bezieht sich auf einen Erntevorsatz für eine Erntemaschine nach dem Oberbegriff des Anspruchs 1.

### Stand der Technik

Schneidwerke dienen in der Landwirtschaft als Erntevorsätze für selbstfahrende Erntemaschinen bei der Getreideernte, in der Regel für Mähdrescher, obwohl sie auch als Erntevorsatz für Feldhäcksler verwendet werden können, beispielsweise bei der Ernte von Ganzpflanzensilage. Schneidwerke umfassen einen Messerbalken, eine darüber angeordnete Haspel und einen Querförderer, der das abgeschnittene Erntegut an einen Schrägförderer des Mähdreschers oder Einzugsförderer des Feldhäckslers abgibt. Die Haspel dient dazu, in den stehenden Bestand des Ernteguts einzugreifen und ihn nach hinten zu fördern, damit es durch den Messerbalken abgeschnitten und vom Querförderer erfasst werden kann, der es einer rückwärtigen Abgabeöffnung des Schneidwerks zuführt, an welcher es von einem Schrägförderer übernommen und zur Weiterverarbeitung ins Innere des Mähdreschers einführt. Als Querförderer dient bei vielen Schneidwerken eine Querförderschnecke. Auch Maispflücker und Aufsammler für Gras werden mit Querförderschnecken zur Abförderung des Ernteguts verwendet. Die Querförderschnecken umfassen üblicherweise in ihren äußeren Bereichen um ein mittiges Rohr gelegte Förderwendel und sind im mittleren Abgabebereich mit gesteuerten Fingern ausgestattet.

Die Querförderschnecke ist im Stand der Technik innerhalb gewisser Grenzen höhenbeweglich gegenüber dem Rahmen des Erntevorsatzes gelagert, damit sie gegen die Kraft einer Feder nach oben ausweichen kann, abhängig vom jeweiligen Erntegutdurchsatz (DE 102 41 216 A1) oder ihr Weg nach oben wird durch einen Anschlag begrenzt, der zum Reversieren nach einem Erntegutstau fremdkraftgesteuert nach oben verlagerbar ist (EP 1 738 634 A1), oder die vertikale und/oder horizontale Position der Querförderschnecke wird fremdkraftgesteuert durch einen Bediener vorgegeben (DE 40 21 030 C2).

Die US 2018/0271019 A1 beschreibt einen Erntevorsatz mit einer Querförderschnecke, die mittels eines Aktors zwischen einer Betriebsposition, in der sie mit dem Erntegut zusammenwirkt, und einer Außerbetriebsposition bewegbar ist, in der sie den Blick des Fahrers auf den Erntevorsatz nicht behindert. Ein Sensor erfasst die Menge des Ernteguts im Erntevorsatz und steuert den Aktor so an, dass die Querförderschnecke nur dann im Eingriff mit dem Erntegut ist, wenn sie, z.B. bei größeren Durchsätzen, wirklich benötigt wird. In der EP 0 993 766 A1 wird ein Erntevorsatz beschrieben, dessen Querförderschnecke beim Reversieren selbsttätig angehoben wird.

Die nachveröffentlichte EP 3 628 142 A1 zeigt einen Erntevorsatz, dessen Querförderschnecke abhängig von der Dichte der zu erntenden Pflanzen und/oder deren Feuchte verstellt wird. In der ebenfalls nachveröffentlichten EP 3 552 473 A1 wird eine Verstellung der Arbeitshöhe der Querförderschnecke eines Erntevorsatzes basierend auf der Art des zu erntenden Getreides, dessen Durchsatz, der Halmlänge der geschnittenen Pflanzen und/oder dem Antriebsdrehmoment der Querförderschnecke beschrieben.

### Problem

Im Stand der Technik ist nach alledem vorgesehen, die vertikale Position der Querförderschnecke festzusetzen (DE 40 21 030 C2) oder nach oben hin zu begrenzen (EP 1 738 634 A1), was den Nachteil hat, dass sie ihre vertikale Position nicht oder nur in beschränktem Maß an den jeweiligen Erntegutdurchsatz anpassen kann, sodass sich das Erntegut bei ungünstigen Betriebsbedingungen (hohe lokale Durchsätze) unter der Querförderschnecke verklemmen kann, oder sie durch Federkraft nach unten zu drücken (DE 102 41 216 A1), was den Nachteil hat, dass man relativ kräftige Federn benötigt und keine Anpassung der Kraft an Ernteguteigenschaften ermöglicht, denn manches Erntegut ist weicher als anderes Erntegut und benötigt somit andere Andruckkräfte zur optimalen Querförderung. Der Stand der Technik nach US 2018/0271019 A1 beschreibt zwar eine Art Automatisierung der Verstellung der Querförderschnecke, jedoch erfolgt diese für die gesamte Breite des Erntevorsatzes jeweils gleich. Analoges gilt für den erwähnten, nachveröffentlichten Stand der Technik.

Die vorliegende Erfindung hat sich zum Ziel gesetzt, die erwähnten Probleme zumindest teilweise zu lösen.

### Lösung

Ein Erntevorsatz für eine Erntemaschine ist mit einem tragenden Rahmen, Mitteln zum Aufnehmen und/oder Abschneiden von Erntegut von einem Feld und einer mittels eines fremdkraftbetätigten Aktors, der mit einer Steuereinrichtung verbunden ist, positionsverstellbaren Querförderschnecke zum Transport des Ernteguts zu einer Abgabeöffnung ausgestattet. Die Steuereinrichtung ist betreibbar, den Aktor selbsttätig in Abhängigkeit von wenigstens einer Ernteguteigenschaft anzusteuern.

An beiden Enden der Querförderschnecke sind separat ansteuerbare Aktoren vorgesehen, die getrennt voneinander durch die Steuereinrichtung in der oben beschriebenen Weise in Abhängigkeit von einer Ernteguteigenschaft der jeweiligen Teilbreite der Querförderschnecke positionsverstellbar sind und/oder die Querförderschnecke setzt sich aus zumindest zwei, seitlich nebeneinander angeordneten Abschnitten zusammen, die separat durch zugeordnete Aktoren durch die Steuereinrichtung in der oben beschriebenen Weise in Abhängigkeit von einer Ernteguteigenschaft des jeweiligen Abschnitts positionsverstellbar sind.

Die Steuereinrichtung kann mit einer Bedienereingabeeinrichtung zur Eingabe der Art des Ernteguts und/oder einem insbesondere als Kameraanordnung ausgeführten Sensor zur Erkennung der Art des Ernteguts verbunden und betreibbar sein, den Aktor abhängig von der eingegebenen und/oder erkannten Art des Ernteguts zu verstellen.

Weiterhin kann die Steuereinrichtung mit einem Sensor zur Erfassung eines vom Erntegut beeinflussten Parameters - insbesondere des Durchsatzes - verbunden und betreibbar sein, den Aktor abhängig vom erfassten Parameter zu verstellen. Der Sensor kann eingerichtet sein, wenigstens einen der folgenden Parameter zu erfassen: Auflagedruck der Querförderschnecke auf das Erntegut, Antriebsmoment der Querförderschnecke, Durchsatz des Erntevorsatzes. Der Aktor kann ein Hydraulikzylinder sein und der Sensor den Druck im Hydraulikzylinder erfassen, um den Auflagedruck der Querförderschnecke auf das Erntegut zu sensieren.

Der Querförderschnecke kann ein Abstreifer zugeordnet sein, der gemeinsam mit der Querförderschnecke positionsverstellbar ist, wozu der Aktor der Querförderschnecke oder ein separater Aktor dienen kann.

Der Erntevorsatz kann in Form eines Schneidwerks, Maispflückers, Aufsammlers oder Schwadmähers ausgeführt sein. Bei einem Schneidwerk sind als Mittel zum Aufnehmen und/oder Abschneiden von Erntegut von einem Feld eine Haspel und ein Messerbalken vorgesehen. Bei einem Maispflücker sind als Mittel zum Aufnehmen und/oder Abschneiden von Erntegut von einem Feld Pflückeinheiten vorgesehen. Bei einem Aufsammler sind als Mittel zum Aufnehmen und/oder Abschneiden von Erntegut von einem Feld eine Aufsammeltrommel vorgesehen und bei einem Schwadmäher sind als Mittel zum Aufnehmen und/oder Abschneiden von Erntegut von einem Feld Mäheinrichtungen vorgesehen.

Der Erntevorsatz wird in Verbindung mit einer Erntemaschine verwendet, bei der es sich um einen Mähdrescher oder einen Feldhäcksler oder eine Ballenpresse oder ein Mähfahrzeug handeln kann.

### Ausführungsbeispiel

In den Zeichnungen ist ein nachfolgend näher beschriebenes Ausführungsbeispiel dargestellt. Es zeigen:
- Fig. 1: eine seitliche Ansicht eines selbstfahrenden Mähdreschers mit einem Erntevorsatz,
- Fig. 2: eine Draufsicht auf den Erntevorsatz,
- Fig. 3: eine schematische seitliche Ansicht der Querförderschnecke und eines Aktors des Erntevorsatzes, und
- Fig. 4: ein Schema der Steuereinrichtung.

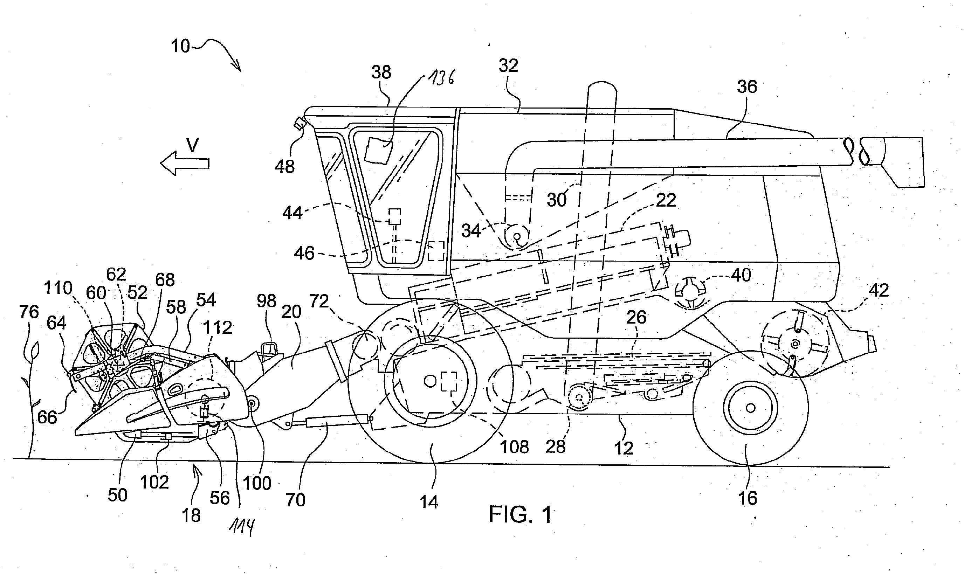

Die Figur 1 zeigt eine selbstfahrende Erntemaschine 10 in der Art eines Mähdreschers. Sie umfasst ein tragendes Fahrgestell 12, das sich durch antreibbare Vorderräder 12 und durch lenkbare Hinterräder 16 auf dem Boden abstützt und durch die Räder 14, 16 in einer Vorwärtsrichtung V über ein Feld bewegbar ist. Die Räder 14 und optional 16 werden durch Antriebsmittel (nicht gezeigt) in Drehung versetzt, um die Erntemaschine 10 über ein abzuerntendes Feld zu bewegen. Im Folgenden beziehen sich Richtungsangaben, wie vorn oder hinten oder seitlich, auf die Vorwärtsrichtung V der Erntemaschine 10, die in der Figur 1 nach links verläuft.

### Erntemaschine

Am vorderen Bereich der Erntemaschine 10 ist ein Erntevorsatz 18 in Form eines Schneidwerks lösbar angebracht, um während des Erntevorgangs Erntegut 76 in Form von Korn oder anderen, druschfähigen Halmfrüchten vom Feld zu ernten und sie nach oben und hinten durch einen Schrägfördererzusammenbau 20 einem axialen Dreschzusammenbau 22 zuzuführen. Das Gemisch aus Korn und anderem Material, das durch Dreschkörbe oder Trennroste des axialen Dreschzusammenbaus 22 tritt, erreicht eine Reinigungseinrichtung 26. Von der Reinigungseinrichtung 26 gewonnenes, sauberes Korn wird durch eine Körnerschnecke 28 einem Kornelevator 30 zugeführt, der es in einen Korntank 32 fördert. Das saubere Korn im Korntank 32 kann durch ein Entladesystem mit einer Querförderschnecke 34 und einem Entladeschneckenförderer 36 auf ein Transportfahrzeug überladen werden. Die durch den axialen Dreschzusammenbau 22 ausgestoßenen Erntegutreste werden mittels einer Fördertrommel 40 einem Strohhäcksler 42 zugeführt, der sie häckselt und über die Breite des Schneidwerks über das Feld verteilt. Die erwähnten Systeme werden durch einen Verbrennungsmotor angetrieben und werden durch einen Bediener in einer Kabine 38 kontrolliert. Der gezeigte, axiale Dreschzusammenbau 22 mit einem oder mehreren axialen Dresch- und Trennrotoren ist lediglich eine beispielhafte Ausführung und kann durch eine tangentiale Dreschanordnung mit einer oder mehreren Dreschtrommeln und nachfolgenden Strohschüttlern oder Trennrotoren ersetzt werden.

### Erntevorsatz

Der Erntevorsatz 18 umfasst einen sich hin- und her bewegenden Messerbalken 50, der sich im Wesentlichen über die gesamte Breite des Erntevorsatzes 18 erstreckt. Der Messerbalken 50 kann, wie im Stand der Technik bekannt, starr oder flexibel sein. Eine Haspel 52 ist am Erntevorsatz 18 angebracht und erstreckt sich im Wesentlichen über die gesamte Breite des Erntevorsatzes 18 (oder einen Teil davon). Die äußeren Enden der Haspel 52 sind an Armen 54 abgestützt, von denen in der Figur 1 nur einer gezeigt wird. Die Arme 54 haben rückwärtige Enden, die um sich quer zur Vorwärtsrichtung erstreckende Achsen am Rahmen 56 des Schneidwerks, 18, der sich ebenfalls über die Breite des Erntevorsatzes 18 erstreckt, angelenkt sind und sich von dort nach vorn erstrecken. Jeder Arm 54 ist mit einem Aktor 58 in Form eines hydraulischen Zylinders gekoppelt, der schwenkbar am Rahmen 56 und am Arm 54 angelenkt ist. Die Arme 54 und somit die Haspel 52 werden durch ein Verstellen (Einziehen und Ausstrecken) des Aktors 58 abgesenkt und angehoben.

An einem mittigen Rohr 62, das durch einen kontrollierbaren Antrieb 110 während des Erntebetriebs (in Figur 1 im Gegenuhrzeigersinn) in Drehung versetzbar ist, sind über sich radial zum Rohr 62 erstreckende Haspelarme 116 Haspelzinkenträger 64 abgestützt, die sich über die Breite des Erntevorsatzes 18 oder einen Teil davon erstrecken und an denen Haspelzinken 66 angebracht sind. Ein zweiter Aktor 68 in Form eines hydraulischen Zylinders ist angepasst, die horizontale Position der Haspel 52 zu verstellen, indem er eine Stützlagerung des Rohrs 62 entlang des Arms 54 bewegt. Der Erntevorsatz 18 umfasst auch eine Querförderschnecke 112, um das vom Messerbalken 50 abgeschnittene Erntegut zur Mitte des Erntevorsatzes 18 zu fördern und es von dort durch eine rückwärtige Öffnung im Rahmen 56 dem Schrägförderer 20 zuzuführen. Die Höhe des Erntevorsatzes 18 über dem Boden wird durch einen vierten Aktor 70 definiert, welcher den Schrägförderer 20 und somit den lösbar daran befestigten Erntevorsatz 18 um eine sich quer zur Vorwärtsrichtung erstreckende, horizontale Achse 72 gegenüber dem Fahrgestell 12 der Erntemaschine 10 verschwenkt. Der Aktor 70 wird durch eine elektronische Steuereinrichtung 46 basierend auf einer Bedienereingabe über eine Bedienerschnittstelle 44 oder selbsttätig kontrolliert, wobei die elektronische Steuereinrichtung 46 das Erntevorsatz 18 in einer gewünschten Höhe über dem Boden halt oder es mit einem gewünschten Druck über den Boden führt. Wie im Stand der Technik bekannt, kann das Erntevorsatz 18 zusätzlich um eine sich horizontal, in Vorwärtsrichtung erstreckende Achse verschwenken, um der Bodenkontur zu folgen, ebenfalls durch die Steuereinrichtung 46 und einen zugehörigen Aktor kontrolliert. Ein Aktor 98 kann die Neigung des Erntevorsatzes 18 um die Querachse gegenüber dem Schrägförderer 20 kontrollieren.

Die Länge des Schneidtisches ist durch einen Aktor 102 kontrollierbar. Demnach ist die horizontale Position des Messerbalkens 50 gegenüber dem Rahmen 56 des Erntevorsatzes 18 durch den Aktor 102 verstellbar, der durch die Bedienerschnittstelle 44 und die elektronische Steuereinrichtung 46 kontrolliert wird. Mögliche Ausführungsformen eines Erntevorsatzes 18 mit längenveränderlichem Schneidtisch sind in der EP 2 803 257 A1 und der WO 03/049532 A1 gezeigt.

Die Haspelzinkenträger 64 und somit die Haspelzinken 66 sind gegenüber den Haspelarmen 116 drehbar gelagert, was es ermöglicht, die Haspelzinken 66 über den gesamten Umlauf um das Rohr 62 in einer gewünschten, in der Regel etwa vertikalen Ausrichtung zu halten. Hierzu dienen an sich bekannte Mechanismen, um die Drehstellung der Haspelträgerzinken 64 gegenüber den Haspelarmen 116 abhängig von der Drehstellung der Haspelarme 116 um die Drehachse des Rohrs 62 zu kontrollieren.

Die Steuereinrichtung 46 kann zudem einen Aktor 108 zur Vorgabe der Vortriebsgeschwindigkeit der Erntemaschine 10 kontrollieren, die zudem mittels eines Fahrhebels 44 kontrollierbar sein kann. Die Steuereinrichtung 46 ist mit einer Kameraanordnung 48 verbunden, die den Erntevorsatz 18 und das davor befindliche Feld überwacht. Die Ansteuerung der Aktoren 58, 68, 98, 102, 70, 108, 110 kann mittels einer Bedienerschnittstelle 136 (d.h. durch Bedienereingabe) oder automatisch erfolgen, wozu auf die Offenbarung der DE 10 2018 206 507 A1 und den dort zitierten Stand der Technik verwiesen sei.

### Verstellung der Position der Querförderschnecke

Die Querförderschnecke 112 ist an beiden Enden mit jeweils einem Aktor 114 verbunden, der zur aktiven, fremdkraftbetätigten Verstellung der vertikalen Position der Querförderschnecke 112 dient. Der Aktor 114 ist als doppelt wirkender Hydraulikzylinder ausgeführt, obwohl auch denkbar wäre, eine einfach wirkende Ausführungsform zu verwenden, die von oben her auf die Querförderschnecke 112 einwirkt. Auch könnte man einen elektromagnetisch oder pneumatisch verstellten Aktor 114 verwenden.

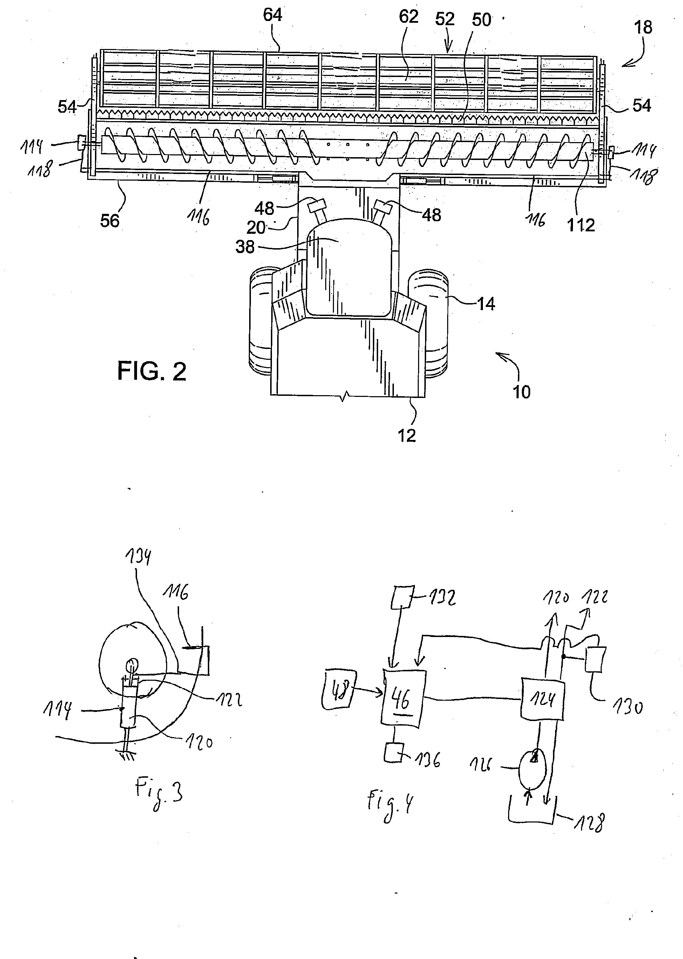

Wie aus den Figuren 1 bis 4 hervorgeht, sind die Aktoren 114 mit einer Ventileinheit 124 verbunden, die durch eine Steuereinrichtung 46 kontrolliert wird. Die Ventileinheit 124 ist mit einem Vorratsbehälter 128 für Hydrofluid und durch getrennte Leitungen mit beiden Kammern 120, 122 des Aktors 114 verbunden. Ein Drucksensor 130 erfasst den Druck in der Kolbenstangenkammer 122 des Hydraulikzylinders und ist mit der Steuereinrichtung 46 verbunden. Ein Drehmomentsensor 132 erfasst das Antriebsmoment eines rotativen Antriebs der Querförderschnecke 112 und gibt sein Signal an die Steuereinrichtung 46. Der Drehmomentsensor 132 kann den Druck in einem hydrostatischen Antrieb der Querförderschnecke 112 erfassen oder in einen mechanischen Antriebsstrang der Querförderschnecke 112 eingefügt sein.

Die durch den Aktor 114 höhenverstellbare Querförderschnecke 112 ist mechanisch über ein Verbindungselement 134 mit einem Abstreifer 116 gekoppelt, der sich an der Rückwand des Erntevorsatzes 18 befindet (vgl. DE 103 59 398 B3). Wenn die Querförderschnecke 112 demnach durch den Aktor 114 nach oben oder unten bewegt wird, bewegt sich der Abstreifer 116 ebenfalls nach oben oder unten. Zur Verstellung des Abstreifers 11 ist ein separater Aktor (nicht gezeigt) verwendet, der synchron mit dem Aktor 114 angesteuert wird.

Die Funktionsweise der erfindungsgemäßen Positionssteuerung der Querförderschnecke 112 ist derart, dass die Steuereinrichtung 46 den aktuell von der Querförderschnecke 112 zu fördernden Durchsatz erfasst, wozu sie auf einen oder mehreren der folgenden Sensoren zurückgreift: Kameraanordnung 48, Drehmomentsensor 132 und/oder Drucksensor 130. Die Kameraanordnung 48 erfasst die Höhe und Dichte des Bestandes vor dem Erntevorsatz 18, unter Verwendung einer geeigneten Bildverarbeitungssoftware, was ein Abschätzen oder Berechnen des zu erwartenden Durchsatzes der Querförderschnecke 112 ermöglicht. Der Drehmomentsensor 132 erfasst das derzeitige Drehmoment, mit dem die Querförderschnecke 112 angetrieben wird, welches ein Maß für den Erntegutdurchsatz der Querförderschnecke ist. Der Drucksensor 130 erfasst den Druck in der Kolbenstangenkammer 122 des Aktors 114, d.h. den Druck, mit dem der Aktor 114 die Querförderschnecke 112 auf das Erntegut drückt, welcher ebenfalls ein Maß für den Durchsatz der Querförderschnecke 112 ist.

Die Steuereinrichtung 46 kontrolliert die Ventileinrichtung 124 im Betrieb derart, dass die Querförderschnecke 112 durch den Aktor 114 (ggf. unter Verwendung eines weiteren Sensors zur Erfassung der Position des Aktors 114, in den Figuren nicht gezeigt) in eine Position gebracht wird, die dem aktuellen Durchsatz angemessen ist und/oder in welcher die Querförderschnecke 112 mit angemessenem Druck auf das Erntegut einwirkt. Die Querförderschnecke 112 wird sich demnach bei kleineren Durchsätzen weiter unten befinden als bei größeren Durchsätzen. Der Auflagedruck der Querförderschnecke 112 kann bei größeren Durchsätzen. Der Auflagedruck der Querförderschnecke 112 kann bei größeren Durchsätzen (ggf. unter- oder überproportional) größer sein als bei kleineren Durchsätzen, um die erforderliche Querförderung zu erreichen. Hierbei kann ein geeigneter, proportionaler oder nicht-proportionaler Zusammenhang zwischen Durchsatz und Druck in der Steuereinrichtung 46 abgespeichert sein und zur Ansteuerung des Aktors 114 verwendet werden. Bei einer anderen Ausführungsform wird der Druck im Aktor 114 konstant gehalten und hängt optional lediglich von der Erntegutart ab.

Zudem kann mittels einer Bedienereingabeeinrichtung 136 die Erntegutart eingegeben werden und die Steuereinrichtung 46 die Position und/oder Auflagekraft der Querförderschnecke 112 abhängig von der Erntegutart kontrollieren. Die Erntegutart kann auch durch die Kameraanordnung 48 erkannt werden. Die eingegebene oder erkannte Erntegutart kann durch die Steuereinheit 46 auch zur Kontrolle anderer Einstellungen der Erntemaschine 10 verwendet werden, z.B. für den Dreschzusammenbau 22 oder die Reinigungseinrichtung 26. Auch kann der von der Steuereinrichtung 46 zur Kontrolle des Aktors 114 ermittelte Durchsatz zur Kontrolle der Vortriebsgeschwindigkeit der Erntemaschine 10 mittels des Aktors 108 genutzt werden, wie auch zur Kontrolle anderer Einstellungen der Erntemaschine 10, z.B. für den Dreschzusammenbau 22 oder die Reinigungseinrichtung 26.

Die Ansteuerung der Aktoren 114 an beiden Enden der Querförderschnecke 112 erfolgt unterschiedlich, abhängig von den Ernteguteigenschaften auf beiden Hälften der Querförderschnecke 112. Die Querförderschnecke 112 ist auch in mehrere, seitlich nebeneinander angeordnete Abschnitte unterteilt und separat durch zugeordnete Aktoren 114 positionsverstellt, ggf. an beiden Enden unterschiedlich.

## Patentansprüche

1. Erntevorsatz (18) für eine Erntemaschine (10), mit einem tragenden Rahmen (56), Mitteln zum Aufnehmen und/oder Abschneiden von Erntegut von einem Feld und einer mittels eines fremdkraftbetätigten Aktors (114), der mit einer Steuereinrichtung (46) verbunden ist, positionsverstellbaren Querförderschnecke (112) zum Transport des Ernteguts zu einer Abgabeöffnung, wobei die Steuereinrichtung (46) betreibbar ist, den Aktor (114) selbsttätig in Abhängigkeit von wenigstens einer Ernteguteigenschaft anzusteuern,
**dadurch gekennzeichnet, dass** an beiden Enden der Querförderschnecke (112) separat ansteuerbare Aktoren (114) vorgesehen sind, die getrennt voneinander in Abhängigkeit von einer Ernteguteigenschaft der jeweiligen Teilbreite der Querförderschnecke (112) positionsverstellbar sind,
und/oder dass sich die Querförderschnecke (112) aus zumindest zwei, seitlich nebeneinander angeordneten Abschnitten zusammensetzt, die separat durch zugeordnete Aktoren (114) in Abhängigkeit von einer Ernteguteigenschaft des jeweiligen Abschnitts positionsverstellbar sind.

2. Erntevorsatz (18) nach Anspruch 1, wobei die Steuereinrichtung (46) mit einer Bedienereingabeeinrichtung (136) zur Eingabe der Art des Ernteguts und/oder einem Sensor, insbesondere in Form einer Kameraanordnung (48), zur Erkennung der Art des Ernteguts verbunden und betreibbar ist, den Aktor (114) abhängig von der eingegebenen und/oder erkannten Art des Ernteguts zu verstellen.

3. Erntevorsatz (18) nach Anspruch 1 oder 2, wobei die Steuereinrichtung (46) mit einem Sensor (48, 130, 132) zur Erfassung eines vom Erntegut beeinflussten Parameters, insbesondere des Durchsatzes, verbunden und betreibbar ist, den Aktor abhängig vom erfassten Parameter zu verstellen.

4. Erntevorsatz (18) nach Anspruch 1, wobei der Sensor (48, 130, 132) eingerichtet ist, wenigstens einen der folgenden Parameter zu erfassen: Auflagedruck der Querförderschnecke auf das Erntegut, Antriebsmoment der Querförderschnecke, Durchsatz des Erntevorsatzes (18).

5. Erntevorsatz (18) nach Anspruch 4, wobei der Aktor (114) ein Hydraulikzylinder ist und der Sensor (130) den Druck im Hydraulikzylinder erfasst.

6. Erntevorsatz (18) nach einem der vorhergehenden Ansprüche, wobei der Querförderschnecke (112) ein Abstreifer (116) zugeordnet ist, der gemeinsam mit der Querförderschnecke (112) positionsverstellbar ist.

7. Erntevorsatz (18) nach einem der vorhergehenden Ansprüche in Form eines Schneidwerks, Maispflückers, Aufsammlers oder Schwadmähers.

8. Erntemaschine (10) mit einem Erntevorsatz (18) nach einem der vorhergehenden Ansprüche.

## Claims

1. Harvesting header (18) for a harvester (10), having a supporting frame (56), having means for receiving and/or cutting crop from a field, and having a transverse conveying screw (112) which is adjustable in terms of position by means of a power-operated actuator (114) connected to a control device (46) and which serves for transporting the crop to a discharge opening, wherein the control device (46) is able to be operated so as to control the actuator (114), according to at least one crop property, in an automatic manner,
**characterized in that** separately controllable actuators (114) are provided at both ends of the transverse conveying screw (112), which actuators are adjustable in terms of position, according to a crop property of the respective part-width of the transverse conveying screw (112), separately from one another,
and/or **in that** the transverse conveying screw (112) is made up of at least two sections which are arranged laterally next to one another and which are adjustable in terms of position, according to a crop property of the respective section, separately by way of assigned actuators (114).

2. Harvesting header (18) according to Claim 1, wherein the control device (46) is connected to an operator input device (136) for inputting the type of crop and/or to a sensor, in particular in the form of a camera arrangement (48), for identifying the type of crop and is able to be operated so as to adjust the actuator (114) according to the input and/or identified type of crop.

3. Harvesting header (18) according to Claim 1 or 2, wherein the control device (46) is connected to a sensor (48, 130, 132) for detecting a parameter influenced by the crop, in particular the throughput, and is able to be operated so as to adjust the actuator according to the detected parameter.

4. Harvesting header (18) according to Claim 1, wherein the sensor (48, 130, 132) is configured to detect at least one of the following parameters: contact pressure of the transverse conveying screw on the crop, drive torque of the transverse conveying screw, throughput of the harvesting header (18).

5. Harvesting header (18) according to Claim 4, wherein the actuator (114) is a hydraulic cylinder and the sensor (130) detects the pressure in the hydraulic cylinder.

6. Harvesting header (18) according to one of the preceding claims, wherein the transverse conveying screw (112) is assigned a stripper (116) which is adjustable in terms of position together with the transverse conveying screw (112).

7. Harvesting header (18) according to one of the preceding claims in the form of a cutting unit, maize picker, pick-up unit or windrower.

8. Harvester (10) having a harvesting header (18) according to one of the preceding claims.

## Revendications

1. Tête de récolte (18) pour une machine de récolte (10), avec un châssis porteur (56), des moyens pour ramasser et/ou couper un produit récolté à partir d'un champ et une vis sans fin transporteuse transversale (112) réglable en position au moyen d'un actionneur (114) actionné par une force extérieure, qui est relié à un dispositif de commande (46), pour le transport du produit récolté vers une ouverture de distribution, le dispositif de commande (46) pouvant être exploité pour commander l'actionneur (114) de manière autonome en fonction d'au moins une propriété du produit récolté,
**caractérisée en ce qu'**aux deux extrémités de la vis sans fin transporteuse transversale (112) sont prévus des actionneurs (114) pouvant être commandés séparément, qui sont réglables en position séparément l'un de l'autre en fonction d'une propriété du produit récolté de la largeur partielle respective de la vis sans fin transporteuse transversale (112),
et/ou **en ce que** la vis sans fin transporteuse transversale (112) se compose d'au moins deux sections agencées latéralement l'une à côté de l'autre, qui sont réglables en position séparément par des actionneurs (114) associés, en fonction d'une propriété du produit récolté de la section respective.

2. Tête de récolte (18) selon la revendication 1, dans laquelle le dispositif de commande (46) est relié à un dispositif de saisie par l'utilisateur (136) pour la saisie du type de produit récolté et/ou à un capteur, notamment sous la forme d'un agencement de caméra (48), pour détecter le type de produit récolté et peut être exploité pour régler l'actionneur (114) en fonction du type de produit récolté saisi et/ou détecté.

3. Tête de récolte (18) selon la revendication 1 ou 2, dans laquelle le dispositif de commande (46) est relié à un capteur (48, 130, 132) pour détecter un paramètre influencé par le produit récolté, notamment le débit, et peut être exploité pour régler l'actionneur en fonction du paramètre détecté.

4. Tête de récolte (18) selon la revendication 1, dans laquelle le capteur (48, 130, 132) est conçu pour détecter au moins un des paramètres suivants : la pression d'application de la vis sans fin transporteuse transversale sur le produit récolté, le couple d'entraînement de la vis sans fin transporteuse transversale, le débit de la tête de récolte (18).

5. Tête de récolte (18) selon la revendication 4, dans laquelle l'actionneur (114) est un vérin hydraulique et le capteur (130) détecte la pression dans le vérin hydraulique.

6. Tête de récolte (18) selon l'une quelconque des revendications précédentes, dans laquelle un racleur (116) est associé à la vis sans fin transporteuse transversale (112), lequel est réglable en position conjointement avec la vis sans fin transporteuse transversale (112).

7. Tête de récolte (18) selon l'une quelconque des revendications précédentes, sous la forme d'une unité de coupe, d'un cueilleur de maïs, d'un ramasseur ou d'une faucheuse-andaineuse.

8. Machine de récole (10) comportant une tête de récolte (18) selon l'une quelconque des revendications précédentes.
